# EUROPEAN PATENT APPLICATION

(11) **EP 4 836 530 A1**
(43) Date of publication of application: **04.11.2026**
(21) Application number: 24914852.9
(22) Date of filing: 27.08.2024
(51) Int. Cl.: H04W 48/16

(54) **CELL ACCESS METHOD, COMMUNICATION DEVICE, AND STORAGE MEDIUM**

(30) Priority: 05.01.2024 CN 202410021772
(71) Applicant: ZTE Corporation, Shenzhen, Guangdong 518057 (CN)
(72) Inventor: MA, Xiaoying, Shenzhen, Guangdong 518057 (CN); CHEN, Mengzhu, Shenzhen, Guangdong 518057 (CN); DAI, Bo, Shenzhen, Guangdong 518057 (CN); MA, Xuan, Shenzhen, Guangdong 518057 (CN); XU, Jun, Shenzhen, Guangdong 518057 (CN); GUO, Qiujin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/114846
(87) International publication number: WO 2025/145630

(57) **Abstract**

The present disclosure provides a cell access method, a communication device, and a storage medium. The method is applied to a first node, and comprises: determining a target cell to be accessed; and accessing the target cell on the basis of configuration information of an access resource of the target cell.

## Description

The present disclosure claims a priority to Chinese Patent Application No. 202410021772.7, and filed on January 05, 2024, the entire content of which is incorporated into herein by reference.

### TECHNICAL FIELD

The present disclosure relates to the field of communications, and in particular, to a cell access method, a communication apparatus, and a storage medium.

### BACKGROUND

In a communication system, a base station is a critical node that connects a user equipment and a communication network. With the widespread application of technologies such as large-scale antennas and large bandwidths, the energy consumption problem of the base station gradually becomes prominent. To solve this problem, green communication and power saving technologies of the base station have become research hotspots. Herein, reducing the sending of common signals/signaling (e.g., system information block (SIB) information) from the base station, and placing the base station into a sleep state when it does not need to send signals/signaling, energy consumption of the base station may be saved.

### SUMMARY

In an aspect, a cell access method is provided, applied to a first node. The cell access method includes:
determining a target cell to be accessed; and
accessing the target cell based on configuration information of an access resource of the target cell.

In another aspect, a cell access method is provided, applied to a second node. The cell access method includes:
sending access information to a first node on a first-type cell; where the access information includes configuration information of an access resource of a second-type cell associated with the first-type cell, and the second-type cell associated with the first-type cell includes a target cell.

In yet another aspect, a cell access apparatus is provided. The cell access apparatus includes:
a determining module, configured to determine a target cell to be accessed; and
an accessing module, configured to access the target cell based on configuration information of an access resource of the target cell.

In yet another aspect, a cell access apparatus is provided. The cell access apparatus includes:
a sending module, configured to send access information to a first node on a first-type cell; where the access information includes configuration information of an access resource of a second-type cell associated with the first-type cell, and the second-type cell associated with the first-type cell includes a target cell.

In yet another aspect, a communication apparatus is provided. The communication apparatus includes: a memory and a processor; the memory is coupled with the processor; the memory is configured to store a computer program; and the processor, upon executing the computer program, implements the cell access method described in any one of the above aspects.

In yet another aspect, a computer readable storage medium is provided. The computer readable storage medium has stored computer program instructions thereon, and the computer program instructions, upon being executed by a processor, implement the cell access method described in any one of the above aspects.

In yet another aspect, a computer program product is provided. The computer program product includes computer program instructions, and the computer program instructions, upon being executed by a processor, implement the cell access method described in any one of the above aspects.

### BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.
FIG. 1 is a schematic diagram of a communication system according to some embodiments of the present disclosure.
FIG. 2 is a flow chart of a cell access method according to some embodiments of the present disclosure.
FIG. 3 is a flow chart of another cell access method according to some embodiments of the present disclosure.
FIG. 4 is a flow chart of yet another cell access method according to some embodiments of the present disclosure.
FIG. 5 is a flow chart of yet another cell access method according to some embodiments of the present disclosure.
FIG. 6 is a flow chart of yet another cell access method according to some embodiments of the present disclosure.
FIG. 7 is a flow chart of yet another cell access method according to some embodiments of the present disclosure.
FIG. 8 is a flow chart of yet another cell access method according to some embodiments of the present disclosure.
FIG. 9 is a flow chart of yet another cell access method according to some embodiments of the present disclosure.
FIG. 10 is a flow chart of yet another cell access method according to some embodiments of the present disclosure.
FIG. 11 is a structural schematic diagram of a cell access apparatus according to some embodiments of the present disclosure.
FIG. 12 is a structural schematic diagram of another cell access apparatus according to some embodiments of the present disclosure.
FIG. 13 is a structural schematic diagram of a communication apparatus according to some embodiments of the present disclosure.

### DETAILED DESCRIPTION

In order to enable those skilled in the art to better understand technical solutions of the embodiments of the present disclosure, the technical solutions in the present disclosure will be described below clearly and completely with reference to the drawings. Obviously, the described embodiments are merely some but not all of the embodiments of the present disclosure. Based on the embodiments in the present disclosure, all other embodiments obtained by those ordinary skilled without creative efforts shall fall within the protection scope of the present disclosure.

It should be noted that, in the present disclosure, words such as "exemplary/exemplarily" or "for example (e.g.)" are used to present an example, illustration, or explanation. Any embodiment or design scheme described with "exemplary/exemplarily" or "for example (e.g.)" in the present disclosure should not be constructed as preferred or advantageous over other embodiments or design schemes. Rather, the use of words such as "exemplary/exemplarily" or "for example (e.g.)" is intended to present relevant concepts in a specific manner.

Hereinafter, expressions such as "first" and "second" are used for descriptive purposes only, but are not to be construed as indicating or implying relative importance or implicitly indicating a number of indicated technical features. Thus, features defined with expressions such as "first" and "second" may explicitly or implicitly include one or more of such features.

In the description of the present disclosure, unless otherwise stated, the symbol "/" means "or", for example, A/B may mean A or B. Herein, "and/or" merely describes an association relationship of associated objects, and means that there are three kinds of relationships, and for example, A and/or B may represent: only A, only B, and both A and B. In addition, "at least one" means one or more, and "multiple/plurality of" means two or more.

The method provided in the embodiments of the present disclosure may be applied to various communication systems. For example, the communication system may be a 5th generation (5G) communication system, a Wi-Fi (Wireless Fidelity) system, a 3rd generation partnership project (3rd Generation Partnership Project, 3GPP)-related communication system, a future evolved communication system (e.g., a 6th generation (6G) communication system, etc.), or a system integrating multiple systems, etc., which is not limited to the embodiments of the present disclosure.

A network architecture of a communication network (including but not limited to 3G, 4G, 5G and future mobile communication networks) in the embodiments of the present disclosure may at least include a first node and a second node. In this example, the first node may be a terminal side device (e.g., including but not limited to a terminal), and the second node may be a network side device (e.g., including but not limited to a base station).

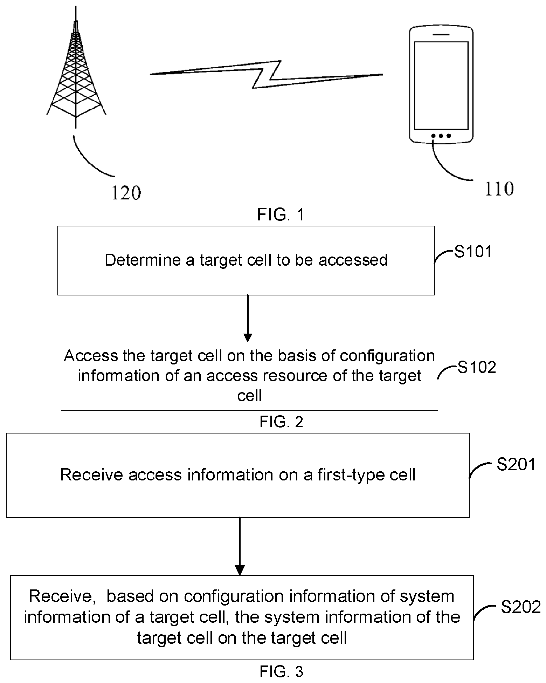

Exemplarily, taking an example in which the first node is a terminal and the second node is a base station, as shown in FIG. 1, FIG. 1 is a communication system provided by the embodiments of the present disclosure. The communication system includes a terminal 110 and a base station 120. The terminal 110 is communicatively connected to the base station 120.

In some embodiments, there may be one or more base stations 120, and one or more terminals 110, which is not limited to the embodiments of the present disclosure.

The terminal 110 may determine a target cell to be accessed, and access the target cell based on configuration information of an access resource of the target cell.

In some embodiments, the configuration information of the access resource includes physical random access channel (PRACH) resource information, or adaptive configuration of the access resource. For example, the adaptive configuration information of the access resource includes a period configuration, a plurality of sets of access resource configurations, and a configuration of using different access resources in different periods. The access resource may dynamically change according to a period.

In some embodiments, the terminal 110 may receive access information, such as SIB information, broadcast by the base station 120, and determine configuration information of an access resource of a first-type cell based on the SIB information, and then access the target cell.

Exemplarily, the terminal 110 may receive the access information on the first-type cell. The access information includes configuration information of an access resource of a second-type cell associated with the first-type cell. The second-type cell associated with the first-type cell includes the target cell. At this case, the terminal 110 may access the target cell based on the configuration information of the access resource of the second-type cell in the access information.

In some embodiments, the terminal 110 receives the access information sent from the base station 120, and accesses the target cell according to the access information.

In some embodiments, the terminal 110 may further send a first signaling to the base station 120, and receive a second signaling from the base station 120 in response to the first signaling, so as to determine the configuration information of the access resource of the target cell based on the second signaling, and access the target cell.

In some embodiments, the second signaling may indicate an access resource index in the adaptive configuration of the access resource, where each access resource index corresponds to a set of access resources.

Exemplarily, the terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc., and the embodiments of the present disclosure do not limit application scenarios. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

The base station 120 is configured to receive signaling delivered by a core network, and broadcast the signaling according to a configuration in the signaling.

In some embodiments, a coverage area of the base station 120 includes at least one cell. Exemplarily, the coverage area of the base station 120 includes a first-type cell and a second-type cell. The base station 120 may send the access information on the first-type cell, and/or send the access information on the second-type cell. The first-type cell may be an anchor cell, and the second-type cell may be a non-anchor cell.

It should be noted that, some network energy saving (NES) operations, such as SIB-less operations, may be used or performed on the non-anchor cell. Based on the SIB-less operation, the base station 120 does not send system information block 1 (SIB1) on the non-anchor cell, or does not send SIB; alternatively, there is no SIB1 or no SIB on the non-anchor cell; alternatively, SIB1 or SIB is absent on the non-anchor cell. When SIB-less is used on the non-anchor cell, SIB information of the non-anchor cell may be received on the anchor cell, that is, the base station 120 may send the SIB information of the non-anchor cell on the anchor cell.

It should be noted that, the anchor cell, or the non-anchor cell, or the cell, or the first-type cell, or the second-type cell mentioned in the embodiments of the present disclosure does not only represent one cell, but may also represent one or more frequency-domain resources, for example, one or more carriers, one or more bandwidths, one or more bandwidth parts, one or more frequency bands, etc.

Exemplarily, the anchor cell may be a primary cell, and the non-anchor cell may be a secondary cell. Alternatively, the anchor cell may be a carrier, and the non-anchor cell may be another carrier. Alternatively, the anchor cell may be a group of carriers, and the non-anchor cell may be another group of carriers. Alternatively, the anchor cell may be a bandwidth, and the non-anchor cell may be another bandwidth. Alternatively, the anchor cell may be a bandwidth part, and the non-anchor cell may be another bandwidth part. Alternatively, the anchor cell may be a group of bandwidths, and the non-anchor cell may be another group of bandwidths, which is not limited to the embodiments of the present disclosure. For the convenience of description and consistency, the following contents are described with cells.

In some embodiments, the first-type cell is a cell in which the terminal has resided before residing in the second-type cell.

In some embodiments, a coverage area of the first-type cell is overlapped with a coverage area of the second-type cell.

In some embodiments, the first-type cell is a group of carriers, and the second-type cell is another group of carriers, and a difference between frequency points of the two groups of carriers does not exceed a first threshold. Exemplarily, the first threshold is greater than or equal to 0 and less than or equal to 1 GHz, 2 GHz, 3 Ghz, 4 GHz or 5 GHz.

In some embodiments, the first-type cell is a group of bandwidths, and the second-type cell is another group of bandwidths, and a difference between frequency points of the two groups of bandwidths does not exceed a second threshold. Exemplarily, the second threshold is greater than or equal to 0 and less than or equal to 1 GHz, 2 GHz, 3 Ghz, 4 GHz or 5 GHz.

In some embodiments, when the terminal has a requirement to access a target cell, the base station 120 may further, after receiving a first signaling from the terminal 110, send a second signaling to the terminal 110 on the target cell or the first-type cell associated with the target cell. The first signaling is used to request configuration information of an access resource of the target cell. The second signaling includes the configuration information of the access resource of the target cell.

In some embodiments, the first signaling is an uplink wake-up signaling, for example, a wake-up signal (wake up signal, WUS) signaling.

In some embodiments, a base station may be a base station or an evolutional base station (evolutional node B, eNB or eNodeB) in long term evolution (LTE), long term evolution advanced (LTEA), a base station device in a 5G network, or a base station in a future communication system, etc., and the base station may include various network side devices such as various macro base stations, micro base stations, home base stations, wireless remote, reconfigurable intelligent surfaces (RISs), routers, relays, and wireless fidelity devices, etc.

It should be noted that, the above scenarios are provided for more clearly explaining the technical solutions of the embodiments of the present disclosure, and do not constitute a limitation on the technical solutions provided in the embodiments of the present disclosure, and the ordinary skilled in the art may know that, with the evolution of system architectures and the emergence of new service scenarios, the technical solutions provided in the embodiments of the present disclosure are also applicable to similar technical problems.

In a communication system, a base station is a critical node that connects a user equipment and a communication network. With the widespread application of technologies such as large-scale antennas and large bandwidths, the energy consumption problem of the base station gradually becomes prominent. To solve this problem, green communication and power saving technologies of the base station have become research hotspots. Reducing the sending of common signals/signaling (e.g., SIB information) from the base station, and placing the base station into a sleep state when it does not need to send signals/signaling, energy consumption of the base station may be saved. Based on the above means of saving energy consumption of the base station, some base stations may choose not to send common signals/signaling (e.g., SIB information), so as to implement energy saving of the network. However, reducing the sending of common signals/signaling, system performance may be affected, and impact may be generated on system capacity etc. Therefore, which signals/signaling may be reduced in sending and how to reduce or eliminate the impact on the system still need further research.

Exemplarily, when the terminal accesses the base station (e.g., accesses a certain cell covered by the base station), the terminal usually needs to receive SIB information, SIB1 information, other pieces of SIB information, paging information, initiate random access channel (RACH) information, etc. on the cell for access. However, for a non-anchor cell using SIB-less, the terminal cannot receive the SIB information, so the terminal will be incapable of accessing the non-anchor cell, affecting normal access of the terminal.

In view of the above problems, referring to FIG. 2, FIG. 2 is a flow chart of a cell access method provided in the embodiments of the present disclosure. As shown in FIG. 2, the cell access method provided in the embodiments of the present disclosure is applied to a first node, and includes S101 to S102 as follows.

In S101, a target cell to be accessed is determined.

In some embodiments, types of cells may include a first-type cell and a second-type cell.

In some embodiments, the first-type cell is a cell for which a power consumption saving function is not enabled. The second-type cell is a cell for which the power consumption saving function is enabled.

In some embodiments, the first-type cell is a cell that sends the SIB1 or the SIB. The second-type cell is a cell that does not send the SIB1 or the SIB.

In some embodiments, the first-type cell may be referred to as an anchor cell, and the second-type cell may be referred to as a non-anchor cell, which is not limited thereto.

In some embodiments, the first-type cell is associated with one or more second-type cells. The terminal may obtain access information of the first-type cell and the second-type cell on the first-type cell. When the first node (e.g., a terminal) needs to access the target cell, the first node may determine a target cell to be accessed from a plurality of cells based on the access information of the plurality of cells. Exemplarily, the first node may determine a target cell that satisfies a current access scenario from the plurality of cells based on signal strength, coverage range, etc. in the access information of the plurality of cells.

In some embodiments, the access information may be indicated via a signaling, or via a plurality of different signalings. As an example, the access information includes configuration information of access resources and access parameters of the first-type cell and the second-type cell. The configuration information of the access resources of the first-type cell and the second-type cell is indicated via the SIB1 or SIB of different cells, and the access parameters are indicated via the SIB1 of the first-type cell.

In some embodiments, the access parameters include at least one of: an access weight, an access priority, an access selection manner, a terminal identification (ID), or a terminal group identifier.

As an example, the access weight may be a priority for the first node to obtain resources when competing for limited radio resources. When a plurality of first nodes simultaneously request to access a radio network, the base station needs to determine which first nodes may obtain a higher priority and resource allocation according to a certain policy. The access weight may be used to distinguish and rank access requirements of different first nodes. A higher access weight indicates that the first node has a higher access priority and may obtain resource allocation more easily. Conversely, a lower access weight indicates that the first node has a lower access priority, and its opportunity to acquire resources may be less.

As another example, the access weight may also be a numerical value used for calculating a priority of candidate cells when selecting an access cell. For example, when there are a plurality of candidate cells, measurement results of the candidate cells need to be multiplied by corresponding access weights, and the obtained numerical values are used to select a final target cell. The higher the numerical value of the access weight, the higher the priority.

In some embodiments, different cells have different access weights.

In some embodiments, a cell may have a plurality of access weights, which corresponds to different bandwidths, carriers or frequency bands of the cell.

In some embodiments, the access weight is related to a priority of candidate cells.

The access selection manner refers to a method and a policy for the first node to perform access. Exemplarily, the access selection manner may be: a random access manner, a frequency division multiplexing manner, a signal quality-based access manner, selecting a target cell based on a measurement result or a threshold, selecting a target cell based on signaling indication, selecting a target cell based on the access parameter, etc. Different access selection manners may be used separately or in combination, which is not limited to the embodiments of the present disclosure.

As another example, the access information includes configuration information of access resources of the first-type cell and the second-type cell, and an indication of the second-type cell associated with the first-type cell. The configuration information of the access resources of the first-type cell and the second-type cell is indicated via SIB1 of different cells. In some embodiments, the indication of the second-type cell associated with the first-type cell is indicated via signaling in core network or non-access stratum (NAS) signaling.

In some embodiments, the first node may identify the first-type cell and the second-type cell associated with the first-type cell based on different manners. As an example, the base station does not send information (e.g., SIB1 information) on the second-type cell, and the first node may receive information of the first-type cell (e.g., SIB1 information or master information block (MIB) information) and information of one or more second-type cells on the first-type cell. Exemplarily, the information of the first-type cell is configured with an ID or PCI of the second-type cell associated with the first-type cell. The ID or PCI of the second-type cell associated with the first-type cell is in a list. Alternatively, the information of the first-type cell is configured with an identifier (ID) or a physical cell identifier (PCI) of the second-type cell associated with the first-type cell. The ID or PCI of the second-type cell associated with the first-type cell is associated with configuration information of the access resource of the second-type cell.

As another example, the first node may acquire the indication of the first-type cell and the second-type cell associated with the first-type cell via a signaling of the core network or an NAS signaling. For example, the signaling of the core network may indicate whether a cell is a first-type cell or a second-type cell. For the second-type cell, there is a core network signaling indicating a first-type cell associated the second-type cell. Alternatively, for the first-type cell, there is a core network signaling indicating a second-type cell associated the first-type cell.

As yet another example, an association relationship between the first-type cell and the second-type cell is predefined. For example, association may be performed according to an ID or a PCI of the cell. Exemplarily, one or more cells with specific IDs or PCIs may be predefined as first-type cells or second-type cells.

In S102, the target cell is accessed based on configuration information of an access resource of the target cell.

In some embodiments, after the first node determines the target cell to be accessed, the first node needs to acquire the configuration information of the access resource of the target cell, so as to access the target cell. Exemplarily, the configuration information of the access resource includes at least one of: information used by the first node for performing random access, a location of a random access resource, or configuration information of a preamble. The first node may perform network setting and connection based on the above information, thereby accessing the target cell.

As an example, the first node may send Msg1, Msg3, or MsgA to the base station at the location of the random access resource for initial access.

As another example, the first node may receive Msg2, Msg4, or MsgB sent from the base station at the location of the random access resource.

In some embodiments, the configuration information of the access resource may be information in the SIB1.

In some embodiments, each configuration information of the access resource is associated with a cell. Exemplarily, each/each group of configuration information of the access resource may be associated with a cell identifier of a cell, or associated with a PCI of a cell. Alternatively, each/each group of configuration information of the access resource may be sent on different signalings (e.g., SIB1), where different signalings are associated with different cells. Each cell has corresponding configuration information of the access resource.

In some embodiments, the first node may further acquire a configuration information list. The configuration information list includes configuration information of access resources of one or more non-anchor cells (e.g., second-type cells), and the first node may determine a target cell from the non-anchor cells and access the target cell.

In some embodiments, after the first node accesses the target cell, if the target cell is a non-anchor cell, the target cell is switched to an anchor cell. That is, the SIB-less or energy saving operation of the target cell is turned off, and the target cell is converted into a normal cell.

In some embodiments, when the target cell accessed by the first node is a non-anchor cell, the first-type cell associated with the non-anchor cell no longer needs to send the access information of the target cell.

In some embodiments, the above method further includes: receiving access information on the first-type cell.

The access information includes configuration information of an access resource of the second-type cell (i.e., a non-anchor cell) associated with the first-type cell (i.e., an anchor cell), and the first-type cell and the second-type cell associated with the first-type cell include the target cell.

In some embodiments, the access information further includes at least one of:
configuration information of the access resource of the first-type cell;
an indication of the second-type cell associated with the first-type cell;
an indication of a cell allowed to be accessed;
an indication of a cell rejected to be accessed; or
an access parameter.

In some embodiments, for the content of the configuration information of the access resource of the first-type cell, reference may be made to the above descriptions of the configuration information of the access resource of the target cell, which will not be repeated in the embodiments of the present disclosure.

It can be understood that, based on the cell access method provided in the embodiments of the present disclosure, the first node, after determining the target cell to be accessed, may directly access the target cell based on the configuration information of the access resource of the target cell, without waiting for the target cell to send common signals/signaling (e.g., SIB information) before performing access. This avoids the problem of access failure of the first node caused by waiting for common signals/signaling, ensures normal access of the first node, and reduces a risk of access failure of the first node.

In some embodiments, as shown in FIG. 3, the above method further includes: S201 to S202.

In S201, access information is received on a first-type cell.

The access information (e.g., SIB1 information) includes configuration information of system information of a second-type cell associated with a first-type cell, and the first-type cell or the second-type cell includes the target cell.

In some embodiments, there is an indication of the second-type cell (i.e., a non-anchor cell associated with the anchor cell) on the first-type cell (i.e., the anchor cell). When receiving the access information on the first-type cell, the first node may receive configuration information of the access resource of the first-type cell, and configuration information of system information of the second-type cell.

In S202, system information of a target cell is received on a target cell based on configuration information of the system information of the target cell.

The system information of the target cell includes configuration information of the access resource of the target cell.

In some embodiments, the first node, before accessing the target cell, may receive the system information (e.g., SIB1 information) of the target cell on the target cell, that is, receive the configuration information of the access resource of the target cell, so as to access the target cell.

In some embodiments, a period of the SIB1 information on the second-type cell is greater than a period of the SIB1 information on the first-type cell.

In some embodiments, the base station sends part of the configuration information of the access resource on the second-type cell.

In some embodiments, the first node receives the configuration information of the access resource corresponding to the target cell, that is receiving the SIB1 information corresponding to the target cell.

In some embodiments, the access information further includes at least one of:
a reference signal configuration of the second-type cell;
a synchronization signal block configuration of the second-type cell;
a downlink carrier location of the second-type cell;
a downlink frequency point of the second-type cell;
a frequency point and/or a carrier location of an uplink WUS of the second-type cell; or
an access parameter.

In some embodiments, receiving the access information on the first-type cell is indicated via SIB1 of the first-type cell and/or the second-type cell.

In some embodiments, if the first node is indicated with a cell prohibited/allowed to be accessed, the first node may only select a target cell from the cells allowed to be accessed for access.

It can be understood that, in the method provided in the embodiments of the present disclosure, by receiving the access information on the first-type cell, and receiving the system information of the target cell on the target cell based on the configuration information of the system information of the target cell, when the target cell does not send common signals/signaling (e.g., access information), the first node may timely acquire related information of the target cell from the first-type cell, so as to ensure normal access of the first node.

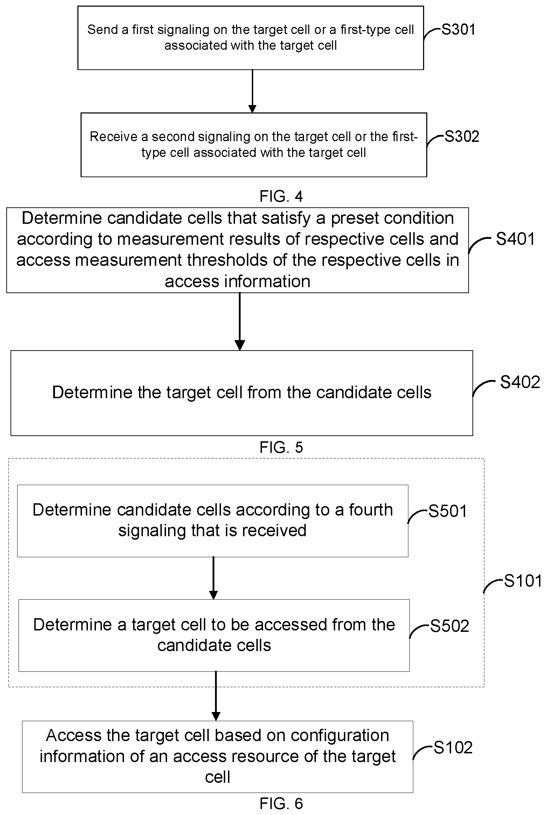

In some embodiments, as shown in FIG. 4, the above method further includes: S301 to S302.

In S301, a first signaling is sent on the target cell or on a first-type cell associated with the target cell.

The first signaling is used to request configuration information of the access resource of the target cell.

In some embodiments, when there is access information on the first-type cell, but the access information does not include configuration information of the access resource of the second-type cell (i.e., the target cell), the first node sends a first signaling to the base station to request the configuration information of the access resource of the target cell.

In some embodiments, if the second-type cell is not associated with the first-type cell, and there is no configuration information of the access resource in the second-type cell, the first node sends a first signaling to the base station to request the configuration information of the access resource of the target cell.

In some embodiments, the first signaling is an uplink wake-up signaling. The first signaling is sent on the first-type cell or on the second-type cell to be accessed (i.e., the target cell).

As an example, the first signaling may be a low-power WUS signaling, used for waking up the base station, or requesting SIB1, or requesting a synchronization signal block (SSB), or requesting access resource information of the target cell.

As another example, the first signaling may be a preamble (initial access message Msg1), and the preamble is a preamble of the first-type cell. The first node sends the preamble on the first-type cell, and the base station may determine a content that the first node wants to request. For example, one or more predefined preambles correspond to different second-type cells. The first node sending a corresponding preamble indicates that the first node requests configuration information of access resource of a corresponding second-type cell.

As yet another example, the first signaling may be a preamble of the second-type cell, where the preamble of the second-type cell is a predefined preamble, and the preamble of the second-type cell is access information. The first node may send the predefined preamble of the second-type cell on the second-type cell. The predefined preamble indicates that the first node requests complete/all configuration information of the access resource of the second-type cell.

As yet another example, the first signaling may be an initial access message Msg3 of the first-type cell, where the Msg3 includes a request for the configuration information of the access resource of the second-type cell.

As yet another example, the first signaling may be an initial access message MsgA of the first-type cell.

In some embodiments, a sending position of the first signaling is indicated in the access information. The access information includes SIB1 of the first-type cell or the second-type cell.

In some embodiments, the access information is indicated via the signaling in the core network or NAS.

In some embodiments, the sending position of the first signaling may also be predefined.

In some embodiments, the access information further includes at least one of:
an indication of a cell allowed to be accessed;
an indication of a cell prohibited to be accessed;
a reference signal configuration of the second-type cell;
a synchronization signal block configuration of the second-type cell;
an access measurement threshold;
a downlink carrier position of the second-type cell; or
configuration information of system information of the second-type cell.

In some embodiments, the access measurement threshold is predefined, and access measurement thresholds of different cells may be different.

In some embodiments, the access information further includes: an uplink resource position for sending the first signaling, and/or a downlink resource position for receiving the configuration information of the access resource.

In S302, a second signaling is received on the target cell or the first-type cell associated with the target cell.

The second signaling includes the configuration information of the access resource of the target cell.

In some embodiments, after requesting the configuration information of the access resource of the second-type cell (i.e., the target cell), the first node needs to monitor (or receive) signaling within a certain period of time, that is, receive the second signaling on the target cell or the first-type cell, so as to access the target cell based on the configuration information of the access resource of the target cell in the second signaling. The second signaling indicates at least one of: a cell ID, a PCI, a PCI list, a cell ID list, or whether a cell may be accessed.

In some embodiments, the second signaling is indicated via at least one of an SSB, an MIB, paging downlink control information (paging DCI), paging, a physical downlink shared channel (PDSCH), a paging early indication (PEI), a low power (LP) WUS, DCI scrambled by a system information-radio network temporary identifier (SI-RNTI), or an SIB.

In some embodiments, a content indicated by the second signaling includes an index of the access resource. In some embodiments, the content indicated by the second signaling includes a time-frequency domain position of the access resource. In some embodiments, the content indicated by the second signaling includes a period of the access resource. In some embodiments, the second signaling indicates a change value of the access resource. In some embodiments, the second signaling indicates a subcarrier spacing (SCS) of the access resource.

In some embodiments, the above method further includes: receiving access information, where the access information includes: a transmission resource configuration of the first signaling and/or a transmission resource configuration of the second signaling.

It can be understood that, when the access information on the first-type cell does not include the configuration information of the access resource of the target cell, the first node may send the first signaling timely to request the configuration information of the access resource of the target cell, so that the first node may normally access the target cell and use a network service based on the configuration information of the access resource of the target cell. Alternatively, when the second-type cell is not associated with the first-type cell, the first node may send the first signaling timely to request the configuration information of the access resource of the target cell, so that the first node may normally access the target cell and use the network service based on the configuration information of the access resource of the target cell. In some embodiments, the second-type cell being not associated with the first-type cell indicates a second-type cell, the second-type cell is an independent cell, and related information of the cell is not transmitted on other cells.

In some embodiments, the first-type cell is a coverage cell.

In some embodiments, the second-type cell is a SIB1-less cell, and before residing in the second-type cell, the first node obtains, on the coverage cell (e.g., the first-type cell), the configuration information related to the uplink WUS of the second-type cell, or an indication of the coverage cell (e.g., the first-type cell) associated with the second-type cell. Exemplarily, the configuration information related to the uplink WUS of the second-type cell or the indication of the coverage cell associated with the second-type cell obtained by the first node on the coverage cell (e.g., the first-type cell) is sent by a core network or NAS.

In some embodiments, the second-type cell is an independent cell, and the related information of the second-type cell (e.g., configuration information of the uplink WUS, etc.) is sent in other cells, but the second-type cell is not associated with the cell that sends its related information (e.g., the configuration information of the uplink WUS, etc.).

In some embodiments, the above S101 may be implemented as: determining a target cell according to access information.

In some embodiments, the above determining the target cell according to the access information may be implemented as: selecting a cell with a best measurement result as the target cell. The measurement result may be used as a type of access information.

In some embodiments, the first node measures SSBs or reference signals of the first-type cell (i.e., the anchor cell) and the second-type cell (i.e., the non-anchor cell), and selects a cell with a best measurement result or a highest measurement value as the target cell.

In some embodiments, the above determining the target cell according to the access information, as shown in FIG. 5, may be implemented as: S401 to S402.

In S401, candidate cells that satisfy a preset condition are determined according to measurement results of respective cells and access measurement thresholds of respective cells in the access information.

In some embodiments, the measurement thresholds may be predefined.

In some embodiments, the preset condition includes at least one of:
a measurement result of a candidate cell being greater than or equal to an access measurement threshold of the candidate cell;
in a case where the candidate cell is a second-type cell, the measurement result of the candidate cell being greater than a measurement result of an associated first-type cell;
in a case where the candidate cell is a second-type cell, a difference between the measurement result of the candidate cell and the measurement result of the associated first-type cell being greater than a first threshold;
in a case where the candidate cell is a second-type cell, the measurement result of the candidate cell being greater than a second threshold, the measurement result of the associated first-type cell being greater than a third threshold, and the second threshold being greater than or equal to the third threshold.

In some embodiments, the access measurement threshold of the first-type cell being different from the access measurement threshold of the second-type cell.

In some embodiments, the access measurement threshold of the first-type cell being less than or equal to the access measurement threshold of the second-type cell.

It can be understood that, the second-type cell (i.e., the non-anchor cell) is an energy-saving cell, and only when the measurement result of the second-type cell is good, the first node accesses the second-type cell and switches the second-type cell to a normal cell. Since the access measurement threshold of the first-type cell is less than or equal to that of the second-type cell, it is ensured that the state of the second-type cell is switched only when the measurement result of the second-type cell is very good, thereby avoiding frequent state switching of the second-type cell.

In some embodiments, the access measurement threshold is indicated in a list, and each access measurement threshold is associated with one or more first-type cells/second-type cells.

As an example, an association manner may be: each row in the list includes both the access measurement threshold and a PCI of the second-type cell. As another example, the association manner may be: the access measurement thresholds in the list corresponding, in ascending order of indexes, to the PCIs of the cells in ascending order. The cells include the first-type cell and the second-type cell associated with the first-type cell.

In some embodiments, a PCI of each cell in the access information is associated with an access measurement threshold.

In S402, the target cell is determined from the candidate cells.

In some embodiments, determining the target cell from the candidate cells includes at least one of:
selecting a cell with a best measurement result or a highest measurement value among the candidate cells as the target cell;
selecting a cell with a largest difference between a measurement result and an access measurement threshold among the candidate cells as the target cell; or
the first node randomly selecting a cell among the candidate cells as the target cell.

In some embodiments, when the candidate cell includes only a cell, the cell is the target cell.

In some embodiments, the above determining the target cell from the candidate cells may also be implemented as: determining the target cell from the candidate cells according to a received third signaling; and/or, determining the target cell from the candidate cells according to at least one of a terminal identifier, a cell identifier, a physical cell identifier, a terminal type, a service type, a number of access resources of a cell, or an access parameter.

In some embodiments, the third signaling includes at least one of: an identifier of the target cell, a physical cell identifier of the target cell, an identifier list of the target cell, a physical cell identifier list of the target cell, or an indication for indicating whether to access a cell. The first node, based on the indication of the third signaling, may determine the target cell that may be accessed.

In some embodiments, the third signaling is indicated via at least one of an SSB, an MIB, DCI (e.g., paging DCI or DCI scrambled by the SI-RNTI), a PDSCH (e.g., a paging PDSCH), a PEI, an LP-WUS signaling, or an SIB signaling.

In some embodiments, the third signaling may be a radio resource control (RRC) signaling. Alternatively, the third signaling may also be signaling sent from the core network. Alternatively, the third signaling may be an NAS signaling.

In some embodiments, the above determining the target cell from the candidate cells according to at least one of the terminal identifier, the cell identifier, the physical cell identifier, the terminal type, the service type, the number of access resources of the cell, or the access parameter may include at least one of a1-a7 as follows.

In a1, the target cell is determined from the candidate cells based on the terminal identifier.

As an example, when mod (terminal identifier, A)=mod (cell identifier, A), the terminal (i.e., the first node) corresponding to the terminal identifier may access the target cell corresponding to the cell identifier. A is a positive integer. In some embodiments, A is predefined or indicated via signaling. Alternatively, when mod (terminal identifier, A)=mod (physical cell identifier, A), the terminal (i.e., the first node) corresponding to the terminal identifier may access the target cell corresponding to the physical cell identifier. A is a positive integer. In some embodiments, A is predefined or indicated via signaling.

As another example, when mod (terminal identifier, A)=B, the terminal (i.e., the first node) corresponding to the terminal identifier may access the second-type cell (i.e., the non-anchor cell). A is a positive integer, and B is an integer greater than or equal to 0.

As yet another example, when mod (terminal identifier, A)=B, the terminal (i.e., the first node) corresponding to the terminal identifier selects a cell with a smallest absolute value of a difference between the cell identifier or the physical cell identifier and B as the target cell.

As yet another example, the first node selects the (mod (terminal identifier, X)+1)-th cell from X cells as the target cell. The above X cells are sorted according to the values of the cell identifiers or the physical cell identifiers, or according to the order of the measurement results from best to worst.

As yet another example, when mod (terminal identifier, cell identifier/physical cell identifier)=B, the terminal (i.e., the first node) corresponding to the terminal identifier may access the cell. B is an integer greater than or equal to 0.

In a2, the target cell from the candidate cells is determined based on the access priority.

In some embodiments, the first node selects a cell with a highest access priority as the target cell.

The access priority may be indicated by the base station via the signaling/signal, or indicated by the core network, or indicated via NAS, or calculated from the cell identifier or the physical cell identifier. For example, the larger the physical cell identifier, the lower the access priority. In some embodiments, the access priority is obtained according to predefined information.

In a3, the target cell from the candidate cells is determined based on the number of access resources of the cell.

Exemplarily, the first node selects a cell with the largest number of access resources of the cell as the target cell.

In a4, the target cell from the candidate cells is determined based on the terminal type.

In some embodiments, the first node selects a cell in which the first node has resided or most recently resided, or selects a cell in which the first node resided most recently as the target cell.

In a5, the target cell from the candidate cells is determined based on the access parameter.

In some embodiments, the access parameter may be an access weight of the cell.

As an example, each cell indicates an access weight and a number of access resources of the cell, and the first node selects a cell with a largest product of the access weight and the number of access resources of the cell as the target cell.

As another example, the first node may select a cell with a largest access weight as the target cell.

In a6, the target cell from the candidate cells is determined based on a service type.

Exemplarily, when a packet corresponding to the service type is relatively large or has a high latency requirement, the first node selects the first-type cell as the target cell.

It can be understood that, at this case, the first-type cell is a cell in a normal state, which may ensure that the first node performs access relatively quickly.

Exemplarily, when the packet corresponding to the service type is relatively large and has a low latency requirement, the first node may select the second-type cell as the target cell.

It can be understood that, at this case, the second-type cell (i.e., the non-anchor cell) has no user access, and after the first node accesses the second-type cell, there may be sufficient resources for transmitting data.

In a7, the target cell from the candidate cells is determined based on the group identifier.

As an example, the $\left(\left⌊\frac{X}{{N}_{group}}\right⌋*{group}_{ID}+mod\left(UEID, \left⌊\frac{X}{{N}_{group}}\right⌋\right)+1\right) - th$ cell is selected from X cells as the target cell for access. Ngroup is a total number of groups, and groupID is a group identifier. The above X cells are sorted according to the values of the cell identifiers, or according to the order of the measurement results from best to worst.

As another example, when mod (cell identifier, A)=group identifier, the cell corresponding to the cell identifier is determined as the target cell. A is a positive integer.

In some embodiments, the group identifier is associated with a group of cells.

As an example, when the terminal identifier/group identifier is an integer, the first node may access the cell corresponding to the group identifier.

As another example, when mod (terminal identifier, A)=group identifier, the first node may access the cell corresponding to the group identifier.

In some embodiments, A is predefined or indicated via the signaling. Grouping information of the cells is determined by the core network.

In some embodiments, the above provided methods for determining the target cell may also be combined to comprehensively determine the target cell.

For example, cells are divided into a plurality of groups, and distinguished by group identifiers. A same group has a same access measurement threshold, and when there are a plurality of candidate cells in the group, the first node may randomly select a cell as the target cell. In a case where there is at most a candidate cell in each group, the first node selects a cell with a best measurement result as the target cell, alternatively, the first node may further determine the target cell according to at least one of the terminal identifier, the signaling indication, the cell identifier, or the access priority selection target.

For example, there are a plurality of candidate cells, and the candidate cells may be obtained through the signaling indication, or may be all cells that the first node may access. The signaling may be a core network signaling, NAS signaling, MIB, SIB, etc. The first node selects a cell satisfying a condition from the candidate cells according to the measurement result. If the number of cells satisfying the condition is greater than 1, the target cell may be further determined from the candidate cells according to at least one of the terminal identifier, the cell identifier, the physical cell identifier, the terminal type, the service type, the number of access resources of a cell, or the access parameter.

That is, the first node may combine a plurality of methods for determining the target cell until a target cell is determined from a plurality of cells.

In some embodiments, an order of use of different methods for determining the target cell may be predefined, or indicated via the signaling.

It can be understood that, the access information contains information of different dimensions of the first-type cell and the second-type cell, and information required by the first node when performing access. The target cell is determined by the first node from the candidate cells based on the access information, so that the judgment and selection of the target cell by the first node are made more accurate, and the successful access of the first node to the target cell, and the stability and access signaling of the access, are ensured.

In some embodiments, as shown in FIG. 6, the above S101 may be implemented as: S501 to S502.

In S501, candidate cells are determined according to a received fourth signaling.

In some embodiments, the fourth signaling is indicated via at least one of the SSB, the MIB, the DCI, the PDSCH, the PEI, the LP-WUS signaling, or the SIB signaling.

As an example, the fourth signaling includes at least one of: an identifier of a cell, or a PCI of a cell. At this case, the fourth signaling only indicates a cell, so the first node, based on the fourth signaling, may determine that the candidate cell is the cell in the fourth signaling.

As another example, the fourth signaling includes at least one of: an identifier of the candidate cell, a physical cell identifier of the candidate cell, an identifier list of the candidate cell, a physical cell identifier list of the candidate cell, or an indication for indicating whether to access a cell. At this case, there may be more than one candidate cell indicated via the fourth signaling, that is, the first node still needs to further determine the target cell from the candidate cells.

In some embodiments, the identifier of the candidate cell identifies a cell that may be accessed. The identifier list of the candidate cell indicates one or more cells that may be accessed, which includes the first-type cell and the second-type cell. In the identifier list of the candidate cell, each cell identifier corresponds to an index, and the fourth signaling indicates the cell identifier by indicating the index. Exemplarily, indicating i in the fourth signaling indicates that the identifier of the (i+1)-th cell in the list is indicated. Alternatively, the fourth signaling may also indicate the identifier of the candidate cell through X bits. Exemplarily, a number of bits for the fourth signaling to indicate the identifier of the candidate cell is determined by a number of cells in the identifier list of the candidate cell. For example, if the number of cells in the identifier list of the candidate cell is A, the number of bits for the fourth signaling to indicate the identifier of the candidate cell is $\left⌈{log}_{2}A\right⌉$. Each codeword corresponds to a cell identifier. For another example, if the number of cells in the identifier list of the candidate cell is A, the number of bits for the fourth signaling to indicate the identifier of the candidate cell is A. Each bit corresponds to a cell in the identifier list of the candidate cell. Exemplarily, '0' may be used to indicate that the corresponding cell is prohibited from being accessed, and '1' may be used to indicate that the corresponding cell is allowed to be accessed.

In some embodiments, the fourth signaling further includes a list of identifiers of the candidate cells, where each index in the list corresponds to a group of identifier lists of the candidate cells.

In some embodiments, the fourth signaling includes a plurality of blocks, where the plurality of blocks are used to indicate identifiers of a plurality of candidate cells/a plurality of identifier lists of the candidate cells, and each identifier of the candidate cell/each identifier list of the candidate cell is indicated in a block. For example, the number of bits for the fourth signaling to indicate the candidate cells is determined by the number of identifiers of the candidate cells of the candidate cells/the number of identifier lists of the candidate cells. One or more bits form a block. Each block in the fourth signaling indicates access information of an identifier of a candidate cell/an identifier list of a candidate cell.

In some embodiments, the PCI indicates a cell that may be accessed. The PCI identifier list of the candidate cell indicates one or more cells that may be accessed, and the PCI identifier list of the candidate cell includes a PCI identifier list of the first-type cell and a PCI identifier list of the second-type cell. In the PCI identifier list of the candidate cell, the PCI identifier of each cell corresponds to an index, and the fourth signaling indicates the PCI identifier of the cell by indicating the index. Exemplarily, indicating i in the fourth signaling indicates that the PCI identifier of the (i+1)-th cell in the list is indicated. Alternatively, the fourth signaling may also indicate the PCI identifier of the candidate cell through X bits. Exemplarily, the number of bits for the fourth signaling to indicate the identifier of the candidate cell is determined by the number of cells in the PCI identifier list of the candidate cell. For example, if the number of cells in the PCI identifier list of the candidate cell is A, the number of bits for the fourth signaling to indicate the identifier of the candidate cell is $\left⌈{log}_{2}A\right⌉$. Each codeword corresponds to a cell identifier. For another example, if the number of cells in the PCI identifier list of the candidate cell is A, the number of bits for the fourth signaling to indicate the identifier of the candidate cell is A. Each bit corresponds to a cell in the cell identifier list. Exemplarily, '0' may be used to indicate that the corresponding cell is prohibited from being accessed, and '1' may be used to indicate that the corresponding cell is allowed to be accessed.

In some embodiments, the fourth signaling further includes a PCI identifier list of the candidate cells, where each index in the list corresponds to a group of PCI identifier lists of the candidate cells.

In some embodiments, the fourth signaling includes a plurality of blocks, where the plurality of blocks are used to indicate PCI identifiers of a plurality of candidate cells/PCI identifier lists of the candidate cells, and the PCI identifier of the each candidate cell/PCI identifier list of the each candidate cell is indicated in a block. For example, the number of bits for the fourth signaling to indicate the candidate cell PCI is determined by the number of identifiers of the PCI of the candidate cell/PCI identifier lists of the candidate cell. One or more bits constitute a block. Each block in the fourth signaling indicates access information of a PCI identifier of a candidate cell/a PCI identifier list of a candidate cell.

In some embodiments, the above indication for indicating whether to access the cell may indicate whether the first node may access the cell in which the fourth signaling is received, or indicate whether the first node may access the first-type cell (i.e., the anchor cell). Exemplarily, the indication for indicating whether to access the cell may be indicated by 1 bit, where different states of the bit represent being accessible or inaccessible. For example, 0 represents being inaccessible, and 1 represents being accessible.

In some embodiments, the above indication for indicating whether to access the cell may also indicate whether the first node may access the second-type cell (i.e., the non-anchor cell). Exemplarily, the indication for indicating whether to access the cell may be indicated by 1 bit, where different states of the bit represent being accessible or inaccessible. For example, 0 represents being inaccessible, and 1 represents being accessible. If it is indicated that the second-type cell may be accessed, the first node may select a second-type cell to access.

In some embodiments, the above indication for indicating whether to access the cell may also indicate that the first node accesses the first-type cell or the second-type cell. Exemplarily, the indication for indicating whether to access the cell may be indicated by 1 bit, where different states of the bit represent accessing different types of cells. For example, 0 represents accessing the second-type cell, and 1 represents accessing the first-type cell.

In S502, the target cell to be accessed is determined from the candidate cells.

In some embodiments, determining the target cell from the candidate cells includes at least one of:
selecting a cell with a best measurement result or a highest measurement value among the candidate cells as the target cell;
selecting a cell with a largest difference between a measurement result and an access measurement threshold among the candidate cells as the target cell;
the first node randomly selecting a cell among the candidate cells as the target cell;
the first node selecting one or more cells according to the measurement result;
the first node selecting one or more cells according to the access information; or
the first node sequentially judging according to an order of the identifier list of the candidate cells, and determining a cell with a measurement result greater than or equal to the access measurement threshold as the target cell.

Exemplarily, the fourth signaling indicates the identifier list of the candidate cells, and the identifier list of the candidate cells is sorted according to an order of cells recommended to be accessed. The first node first judges whether the first cell may be accessed, and if so, the first cell is the target cell. If not, continue to judge whether the second cell may be accessed, and so on. The access priority of the cells is related to the order in the list.

In some embodiments, the above determining the target cell from the candidate cells may also be implemented as: determining the target cell from the candidate cells according to the access information; and/or determining the target cell from the candidate cells according to at least one of the first node identifier, the cell identifier, the physical cell identifier, the first node type, the service type, the number of access resources of the cell, or the access parameter. For some implementations of the present embodiment, reference may be made to the above description of determining the target cell based on the access information and based on at least one of the first node identifier, the cell identifier, the physical cell identifier, the first node type, the service type, the number of access resources of a cell, or the access parameter, which will not be repeated in the embodiments of the present disclosure.

It should be noted that, the target cell in the embodiments of the present disclosure may be a target cell, and subsequently the first node may access the target cell. Alternatively, the target cell may also be a plurality of candidate cells, which are used for the first node to subsequently determine a cell to be accessed from the plurality of candidate cells.

In some embodiments, the various methods described in the embodiments of the present disclosure for determining the target cell/candidate cell may be used in combination. For example, the measurement result (e.g., RSRP (Reference Signal Receiving Power)) is firstly used to determine the candidate cells, then second candidate cells among the candidate cells are determined according to the group identifier, and then the target cell among the second candidate cells is determined according to signaling indication. For another example, the candidate cells that may be accessed are determined according to the signaling indication, and then the target cell among the candidate cells is determined according to the measurement result. For yet another example, the candidate cells that may be accessed are determined according to the terminal and signaling, and then the target cell is determined according to the measurement result.

In some embodiments, determining the target cell according to signaling is the first step of determining the target cell. In some embodiments, determining the target cell according to the measurement result is an operation of finally determining a target cell.

In some embodiments, a priority of the target cell/candidate cell determined according to the signaling indication is greater than a priority of the target cell determined based on the access information and at least one of the first node identifier, the cell identifier, the physical cell identifier, the first node type, the service type, the number of access resources of the cell, or the access parameter. That is, when the signaling indication is received that the target cell/candidate cell may be accessed, the target cell/candidate cell determined by the access information and at least one of the first node identifier, the cell identifier, the physical cell identifier, the first node type, the service type, the number of access resources of the cell, or the access parameter, and that is not within the range in the signaling indication, is not considered.

In some embodiments, the target cell/candidate cell determined according to the measurement result has the highest priority, that is, the target cell determined by using various methods must be the target cell/candidate cell determined according to the measurement result.

In some embodiments, there is no order of priority for determining the target cell/candidate cell according to various methods, and the finally determined target cell is the intersection of the target cells/candidate cells determined by the various methods. Alternatively, the finally determined target cell is the intersection of the target cells/candidate cells determined by the various methods used.

In some embodiments, the above method further includes: receiving the fourth signaling on the first-type cell or the second-type cell associated with the first-type cell. The fourth signaling is signaling of the access information or signaling of the core network. In some embodiments, the fourth signaling is the NAS signaling.

In some embodiments, when the fourth signaling is signaling received on the second-type cell, the fourth signaling is the LP WUS signaling. When the fourth signaling is the signaling accessed on the first-type cell, the fourth signaling is indicated via at least one of: the SSB, the MIB, the DCI, the paging, the PDSCH, the PEI, the LP-WUS, the DCI scrambled by SI-RNTI, or the SIB1.

Exemplarily, the SIB1 for indicating the fourth signaling may be the SIB1 of the first-type cell, or may be the SIB1 of the second-type cell.

Exemplarily, the first node receives the SIB1 of the first-type cell and the second-type cell on the first-type cell, and only the SIB1 of the first-type cell contains the fourth signaling.

Exemplarily, the first node receives the SIB1 of the first-type cell and the second-type cell on the first-type cell, and the SIB1 of each cell indicates whether to access the cell.

Exemplarily, the first node receives the SIB1 of the first-type cell and the second-type cell on the first-type cell, and the SIB1 of each cell contains the fourth signaling, and the contents of the signaling are the same.

Exemplarily, the first node receives the SIB1 of the first-type cell on the first-type cell, and only the SIB1 of the first-type cell contains the fourth signaling.

In some embodiments, the LP WUS signaling may be received on the first-type cell, or may be received on the second-type cell.

In some embodiments, when the LP WUS signaling indicates whether a certain cell (i.e., the cell in which the LP WUS signaling is received) may be accessed, the LP WUS signaling may be received on the first-type cell, or may be received on the second-type cell.

In some embodiments, when the LP WUS signaling indicates information such as a cell ID, a PCI, a PCI list, and a cell ID list, the LP WUS signaling is received on the first-type cell.

It can be understood that, the second-type cell is a non-anchor cell, which cannot send the SIB information, that is, the first node cannot receive the information such as the SIB, the paging DCI, and the PEI on the second-type cell.

It can be understood that, in addition to determining the target cell based on the access information, the first node may also accurately determine the target cell via the received signaling, thereby avoiding unnecessary retries and access processes of the first node, reducing network load, and improving utilization efficiency of the resource.

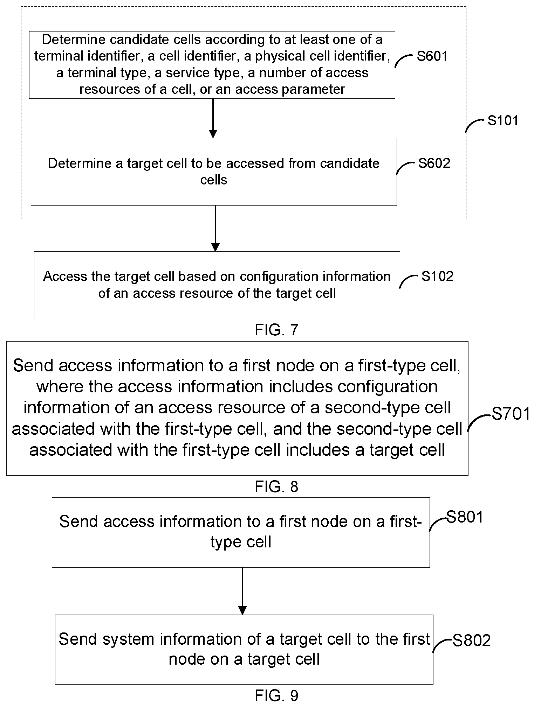

In some embodiments, as shown in FIG. 7, the above S101 may be implemented as: S601 to S602.

In S601, candidate cells are determined according to at least one of a terminal identifier, a cell identifier, a physical cell identifier, a terminal type, a service type, a number of access resources of a cell, or an access parameter.

In some embodiments, for the implementation of the above S601, reference may be made to the above descriptions of the terminal identifier, the cell identifier, the physical cell identifier, the terminal type, the service type, the number of access resources of the cell, or the access parameter, which will not be repeated in the embodiments of the present disclosure.

In S602, a target cell to be accessed is determined from the candidate cells.

In some embodiments, the above S602 may be implemented as: determining the target cell from the candidate cells according to access information; and/or determining the target cell from the candidate cells according to a received fifth signaling.

In some embodiments, for the implementation of determining the target cell from the candidate cells based on the access information, reference may be made to the above descriptions of the access information, which will not be repeated in the embodiments of the present disclosure.

In some embodiments, the fifth signaling includes at least one of: an identifier of the target cell, a physical cell identifier of the target cell, or an indication for indicating whether to access a cell.

In some embodiments, the fifth signaling is indicated via at least one of the SSB, the MIB, the DCI, the PDSCH, the PEI, the LP-WUS signaling, or the SIB signaling.

In some embodiments, for the content of the fifth signaling, reference may be made to the above description of the fourth signaling, which will not be repeated in the embodiments of the present disclosure.

It can be understood that, in the method provided in the embodiments of the present disclosure, the candidate cell and the target cell are determined according to at least one of the terminal identifier, the cell identifier, the physical cell identifier, the terminal type, the service type, the number of access resources of the cell, or the access parameter, so that the target cell may be determined through information in multiple aspects, thereby avoiding problems of inaccurate access and access failure caused by a single piece of information, and ensuring normal access of the terminal.

Referring to FIG. 8, FIG. 8 is a flow chart of a cell access method provided by the embodiments of the present disclosure. As shown in FIG. 8, the cell access method provided by the embodiments of the present disclosure is applied to a second node, and includes S701 as follows.

In S701, access information is sent to a first node on a first-type cell.

The access information includes configuration information of an access resource of a second-type cell associated with the first-type cell, and the second-type cell associated with the first-type cell includes a target cell.

In some embodiments, for the implementation of S701, reference may be made to the above description of S101, which will not be repeated in the embodiments of the present disclosure.

In some embodiments, the access information further includes at least one of:
configuration information of an access resource of the first-type cell;
an indication of the second-type cell associated with the first-type cell;
an indication of a cell allowed to be accessed;
an indication of a cell rejected to be accessed; or
an access parameter.

In some embodiments, the access parameter includes at least one of: an access weight, an access priority, an access selection manner, a terminal identifier, or a terminal group identifier.

It can be understood that, based on the cell access method provided by the embodiments of the present disclosure, the second node sends the access information on the first-type cell, and the access information includes the configuration information of the access resource of the second-type cell, and the second-type cell includes the target cell, so that the first node, after determining the target cell to be accessed, may directly access the target cell based on the configuration information of the access resource of the target cell, without waiting for the target cell to send common signals/signaling (e.g., SIB information) before performing access. This avoids the problem of access failure of the first node caused by waiting for common signals/signaling, ensures normal access of the first node, and reduces a risk of access failure of the first node.

In some embodiments, as shown in FIG. 9, the above method further includes: S801 to S802.

In S801, access information is sent to the first node on the first-type cell.

The access information includes configuration information of system information of the second-type cell associated with the first-type cell, and the second-type cell includes the target cell;

In S802, system information of the target cell is sent to the first node on the target cell.

The system information of the target cell includes configuration information of an access resource of the target cell.

In some embodiments, for the implementation of the above S801 to S802, reference may be made to the above description of S201 to S202, which will not be repeated in the embodiments of the present disclosure.

In some embodiments, the access information further includes at least one of:
a reference signal configuration of the second-type cell;
a synchronization signal block configuration of the second-type cell;
a downlink carrier location of the second-type cell;
a downlink frequency point of the second-type cell;
a frequency point and/or a carrier location of an uplink wake-up signal of the second-type cell; or
an access parameter.

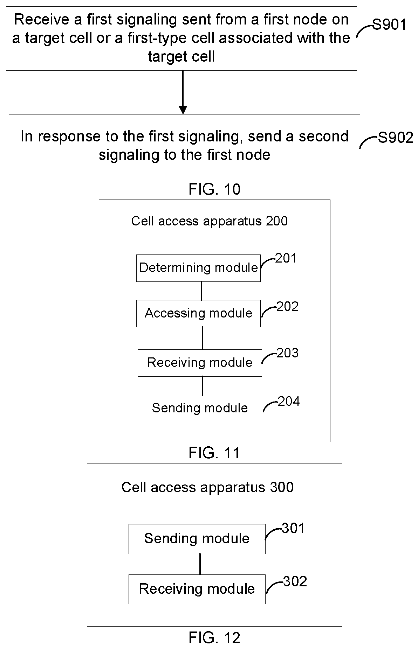

In some embodiments, as shown in FIG. 10, the above method further includes: S901 to S902.

In S901, a first signaling sent from the first node is received on the target cell or the first-type cell associated with the target cell.

The first signaling is used to request configuration information of the access resource of the target cell.

In S902, in response to the first signaling, a second signaling is sent to the first node.

The second signaling includes the configuration information of the access resource of the target cell.

In some embodiments, for the implementation of the above S901 to S902, reference may be made to the above description of S301 to S302, which will not be repeated in the embodiments of the present disclosure.

In some embodiments, the first signaling is an uplink wake-up signaling.

It can be understood that, when the access information on the first-type cell does not include the configuration information of the access resource of the target cell, the second node may receive the first signaling sent from the first node and send the second signaling to the first node, so that the first node may normally access the target cell and use a network service based on the configuration information of the access resource of the target cell. Alternatively, when the second-type cell is not associated with the first-type cell, the second node may receive the first signaling sent from the first node timely, and send the second signaling to the first node to request the configuration information of the access resource of the target cell, so that the first node may normally access the target cell and use the network service based on the configuration information of the access resource of the target cell. In some embodiments, the second-type cell being not associated with the first-type cell indicates a second-type cell, the second-type cell is an independent cell, and related information of the cell is not transmitted on other cells.

In some embodiments, the configuration of the first signaling is indicated in an SSB of the second-type cell.

In some embodiments, the above method further includes: sending the access information to the first node. The access information includes: a transmission resource configuration of the first signaling and/or a transmission resource configuration of the second signaling.

In some embodiments, the access information further includes at least one of:
an indication of a cell allowed to be accessed;
an indication of a cell prohibited to be accessed;
a reference signal configuration of the second-type cell;
a synchronization signal block configuration of the second-type cell;
an access measurement threshold;
a downlink carrier location of the second-type cell; or
configuration information of system information of the second-type cell.

It can be understood that, the access information contains information of different dimensions of the first-type cell and the second-type cell, and information required by the first node when performing access. The target cell is determined by the first node from the candidate cells based on the access information, so that the judgment and selection of the target cell by the first node are made more accurate, and the successful access of the first node to the target cell, and the stability and access signaling of the access, are ensured.

The above introduces the solutions of the embodiments of the present disclosure mainly from the perspective of methods. It can be understood that, in order to implement the above functions, the cell access apparatus contains at least one of corresponding hardware structures and software modules for executing the respective functions. Those skilled in the art should easily realize that the embodiments of the present disclosure can be implemented in the form of hardware or a combination of hardware and computer software, in combination with the units and algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the embodiments of the present disclosure.

In the embodiments of the present disclosure, the cell access apparatus may be divided into functional modules according to the above method embodiments, and for example, each functional module may be divided corresponding to each function, or two or more functions may also be integrated into one functional module. The above integrated modules may be implemented in the form of hardware, or may be implemented in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

FIG. 11 is a structural schematic diagram of a cell access apparatus provided by the embodiments of the present disclosure. The cell access apparatus is applied to a first node and perform the cell access method provided by the above method embodiments. As shown in FIG. 11, a cell access apparatus 200 includes: a determining module 201, an accessing module 202, a receiving module 203, and a sending module 204;
the determining module 201, is configured to determine a target cell to be accessed;
the accessing module 202, is configured to access the target cell based on configuration information of an access resource of the target cell.

In some embodiments, the receiving module 203, is configured to receive access information on a first-type cell, where the access information includes configuration information of an access resource of a second-type cell associated with the first-type cell, and the second-type cell associated with the first-type cell includes the target cell.

In some embodiments, the access information further includes at least one of:
configuration information of an access resource of the first-type cell;
an indication of the second-type cell associated with the first-type cell;
an indication of a cell allowed to be accessed;
an indication of a cell rejected to be accessed; or
an access parameter.

In some embodiments, the receiving module 203, is further configured to receive access information on the first-type cell, where the access information includes configuration information of system information of the second-type cell associated with the first-type cell, and the second-type cell includes the target cell; and receive, based on the configuration information of the system information of the target cell, the system information of the target cell on the target cell, where the system information of the target cell includes the configuration information of the access resource of the target cell.

In some embodiments, the access information further includes at least one of:
a reference signal configuration of the second-type cell;
a synchronization signal block configuration of the second-type cell;
a downlink carrier location of the second-type cell;
a downlink frequency point of the second-type cell;
a frequency point and/or a carrier location of an uplink wake-up signal of the second-type cell; or
an access parameter.

In some embodiments, the access parameters include at least one of: an access weight, an access priority, an access selection manner, a terminal identifier, or a terminal group identifier.

In some embodiments, the sending module 204, is configured to send a first signaling on the target cell or the first-type cell associated with the target cell, where the first signaling is used to request the configuration information of the access resource of the target cell; and the receiving module 203, is further configured to receive a second signaling on the target cell or the first-type cell associated with the target cell, where the second signaling includes the configuration information of the access resource of the target cell.

In some embodiments, the first signaling is an uplink wake-up signaling.

In some embodiments, the second signaling is indicated via at least one of an SSB, an MIB, DCI, a PDSCH, a PEI, an LP-WUS signaling, or an SIB signaling.

In some embodiments, the receiving module 203, is further configured to receive access information, where the access information includes: a transmission resource configuration of the first signaling and/or a transmission resource configuration of the second signaling.

In some embodiments, the transmission resource configuration of the first signaling includes a frequency point and carrier information.

In some embodiments, the access information further includes at least one of:
an indication of a cell allowed to be accessed;
an indication of a cell prohibited to be accessed;
a reference signal configuration of the second-type cell;
a synchronization signal block configuration of the second-type cell;
an access measurement threshold;
a downlink carrier location of the second-type cell; or
configuration information of system information of the second-type cell.

In some embodiments, the determining module 201, is configured to determine the target cell according to the access information.

In some embodiments, the determining module 201, is configured to determine candidate cells that satisfy a preset condition according to measurement results of respective cells and access measurement thresholds of the respective cells in the access information; and determine the target cell from the candidate cells.

In some embodiments, the preset condition includes at least one of:
a measurement result of the candidate cell being greater than an access measurement threshold of the candidate cell;
in a case where the candidate cell is a second-type cell, the measurement result of the candidate cell being greater than a measurement result of an associated first-type cell;
in a case where the candidate cell is a second-type cell, a difference between the measurement result of the candidate cell and a measurement result of an associated first-type cell being greater than a first threshold; or
in a case where the candidate cell is a second-type cell, the measurement result of the candidate cell being greater than a second threshold, the measurement result of the associated first-type cell being greater than a third threshold, and the second threshold being greater than or equal to the third threshold.

In some embodiments, the access measurement threshold of the first-type cell is different from the access measurement threshold of the second-type cell.

In some embodiments, the determining module 201, is configured to determine the target cell from the candidate cells according to a third signaling that is received; and/or, determine the target cell from the candidate cells according to at least one of a terminal identifier, a cell identifier, a physical cell identifier, a terminal type, a service type, a number of access resources of a cell, or an access parameter.

In some embodiments, the third signaling includes at least one of: an identifier of the target cell, a physical cell identifier of the target cell, or an indication for indicating whether to access a cell.

In some embodiments, the third signaling is indicated via at least one of the SSB, the MIB, the DCI, the PDSCH, the PEI, the LP-WUS signaling, or the SIB signaling.

In some embodiments, the determining module 201, is configured to determine candidate cells according to a fourth signaling that is received; and determine the target cell to be accessed from the candidate cells.

In some embodiments, the fourth signaling includes at least one of: an identifier of the candidate cell, a physical cell identifier of the candidate cell, an identifier list of the candidate cell, a physical cell identifier list of the candidate cell, or an indication for indicating whether to access a cell.

In some embodiments, the receiving module 203, is further configured to receive the fourth signaling on the first-type cell or a second-type cell associated with the first-type cell.

In some embodiments, the fourth signaling is indicated via at least one of the SSB, the MIB, the DCI, the PDSCH, the PEI, the LP-WUS signaling, or the SIB signaling.

In some embodiments, the determining module 201, is configured to determine the target cell from the candidate cells according to the access information; and/or, determine the target cell from the candidate cells according to at least one of a terminal identifier, a cell identifier, a physical cell identifier, a terminal type, a service type, a number of access resources of a cell, or an access parameter.

In some embodiments, the determining module 201, is configured to determine candidate cells according to at least one of a terminal identifier, a cell identifier, a physical cell identifier, a terminal type, a service type, a number of access resources of a cell, or an access parameter; and determine the target cell to be accessed from the candidate cells.

In some embodiments, the determining module 201, is configured to determine the target cell from the candidate cells according to the access information; and/or, determine the target cell from the candidate cells according to a fifth signaling that is received.

In some embodiments, the fifth signaling includes at least one of: an identifier of the target cell, a physical cell identifier of the target cell, or an indication for indicating whether to access a cell.

In some embodiments, the fifth signaling is indicated via at least one of the SSB, the MIB, the DCI, the PDSCH, the PEI, the LP-WUS signaling, or the SIB signaling.

In some embodiments, the first-type cell is a cell for which a power consumption saving function is not enabled, and the second-type cell is a cell for which the power consumption saving function is enabled.

FIG. 12 is a structural schematic diagram of a cell access apparatus provided by the embodiments of the present disclosure. The cell access apparatus is applied to a second node and may perform the cell access method provided by the above method embodiments. As shown in FIG. 12, a cell access apparatus 300 includes: a sending module 301 and a receiving module 302;

the sending module 301, is configured to send access information to a first node on a first-type cell; where the access information includes configuration information of an access resource of a second-type cell associated with the first-type cell, and the second-type cell associated with the first-type cell includes a target cell.

In some embodiments, the access information further includes at least one of:
configuration information of an access resource of the first-type cell;
an indication of the second-type cell associated with the first-type cell;
an indication of a cell allowed to be accessed;
an indication of a cell rejected to be accessed; or
an access parameter.

In some embodiments, the sending module 301, is further configured to send access information to the first node on the first-type cell, where the access information includes configuration information of system information of the second-type cell associated with the first-type cell, and the second-type cell includes the target cell; and send system information of the target cell to the first node on the target cell, where the system information of the target cell includes configuration information of an access resource of the target cell.

In some embodiments, the access information further includes at least one of:
a reference signal configuration of the second-type cell;
a synchronization signal block configuration of the second-type cell;
a downlink carrier location of the second-type cell;
a downlink frequency point of the second-type cell;
a frequency point and/or a carrier location of an uplink wake-up signal of the second-type cell; or
an access parameter.

In some embodiments, the access parameter includes at least one of: an access weight, an access priority, an access selection manner, a terminal identifier, or a terminal group identifier.

In some embodiments, the receiving module 302, is configured to receive a first signaling sent from the first node on the target cell or a first-type cell associated with the target cell; where the first signaling is used to request configuration information of the access resource of the target cell; and in response to the first signaling, send a second signaling to the first node; where the second signaling includes the configuration information of the access resource of the target cell.

In some embodiments, the first signaling is an uplink wake-up signaling.

In some embodiments, the sending module 301, is further configured to send access information to the first node; where the access information includes: a transmission resource configuration of the first signaling and/or a transmission resource configuration of the second signaling.

In some embodiments, the access information further includes at least one of:
an indication of a cell allowed to be accessed;
an indication of a cell prohibited to be accessed;
a reference signal configuration of the second-type cell;
a synchronization signal block configuration of the second-type cell;
an access measurement threshold;
a downlink carrier location of the second-type cell; or
configuration information of system information of the second-type cell.

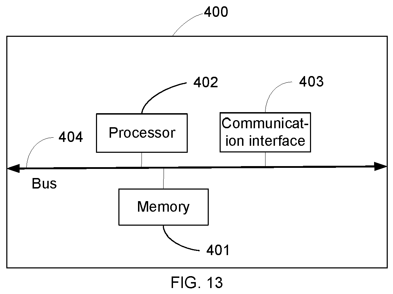

In a case where the functions of the above integrated modules are implemented in the form of hardware, the embodiments of the present disclosure provide a structure of the communication apparatus involved in the above embodiments. As shown in FIG. 13, the communication apparatus 400 includes a memory 401, a processor 402, a communication interface 403 and a bus 404.

The memory 401 may be, but not limited to, a read-only memory (ROM) or other types of static storage devices capable of storing static information and instructions, a random access memory (RAM) or other types of dynamic storage devices capable of storing dynamic information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The processor 402 may be modules and circuits that implement or perform various exemplary logical blocks described in conjunction with the embodiments of the present disclosure. The processor 402 may be a central processing unit, a general-purpose processor, a digital signal processor, an application specific integrated circuit, a field programmable gate array or other programmable logic devices, a transistor logic device, a hardware component or any combination thereof. The processor 402 may implement or perform various exemplary logical blocks, modules and circuits described in conjunction with the embodiments of the present disclosure. The processor 402 may also be a combination capable of implementing computing functions, for example, including a combination of one or more microprocessors, or a combination of a digital signal processor (DSP) and a microprocessor.

The communication interface 403 is configured to connect to other devices via a communication network. The communication network may be an Ethernet, a radio access network, a wireless local area network (WLAN), or the like.

In some embodiments, the memory 401 may be separated from the processor 402, and the memory 401 may be connected to the processor 402 via the bus 404 and is configured to store instructions or program codes. The processor 402, when calling and executing the instructions or program codes stored in the memory 401, is capable of implementing the cell access method provided in the embodiments of the present disclosure.

In some embodiments, the memory 401 may also be integrated with the processor 402. The bus 404 may be an extended industry standard architecture (EISA) bus or the like. Buses 404 may be divided into address buses, data buses, control buses, and the like. For ease of representation, only one thick line is used to represent the bus 404 in FIG. 13, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, upon being executed on a computer, enable the computer to perform the cell access method as described in any embodiment of the above embodiments.

Exemplarily, the above computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure provide a computer program product containing instructions, and the computer program product, upon being executed on a computer, enables the computer to perform the cell access method as described in any embodiment of the above embodiments.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined based on the protection scope of the claims.

## Claims

1. A cell access method, applied to a first node, **characterized in that** the method comprises:
determining a target cell to be accessed; and
accessing the target cell based on configuration information of an access resource of the target cell.

2. The method according to claim 1, further comprising:
receiving access information on a first-type cell, wherein the access information comprises configuration information of an access resource of a second-type cell associated with the first-type cell, and the second-type cell associated with the first-type cell comprises the target cell.

3. The method according to claim 2, wherein the access information further comprises at least one of:
configuration information of an access resource of the first-type cell;
an indication of the second-type cell associated with the first-type cell;
an indication of a cell allowed to be accessed;
an indication of a cell rejected to be accessed; or
an access parameter.

4. The method according to claim 1, further comprising:
receiving access information on a first-type cell, wherein the access information comprises configuration information of system information of a second-type cell associated with the first-type cell, and the second-type cell comprises the target cell; and
receiving, based on configuration information of system information of the target cell, the system information of the target cell on the target cell, wherein the system information of the target cell comprises the configuration information of the access resource of the target cell.

5. The method according to claim 4, wherein the access information further comprises at least one of:
a reference signal configuration of the second-type cell;
a synchronization signal block configuration of the second-type cell;
a downlink carrier location of the second-type cell;
a downlink frequency point of the second-type cell;
a frequency point and/or a carrier location of an uplink wake-up signal of the second-type cell; or
an access parameter.

6. The method according to claim 3 or 5, wherein the access parameter comprises at least one of: an access weight, an access priority, an access selection manner, a terminal identifier, or a terminal group identifier.

7. The method according to claim 1, further comprising:
sending a first signaling on the target cell or a first-type cell associated with the target cell, wherein the first signaling is used to request the configuration information of the access resource of the target cell; and
receiving a second signaling on the target cell or the first-type cell associated with the target cell, wherein the second signaling comprises the configuration information of the access resource of the target cell.

8. The method according to claim 7, wherein the second signaling is indicated via at least one of a synchronization signal block (SSB), a master information block (MIB), downlink control information (DCI), a physical downlink shared channel (PDSCH), a paging early indication (PEI), a low power wake-up signal (LP-WUS) signaling, or a system information block (SIB) signaling.

9. The method according to claim 7, wherein the first signaling is an uplink wake-up signaling.

10. The method according to claim 7, further comprising:
receiving access information, wherein the access information comprises: a transmission resource configuration of the first signaling and/or a transmission resource configuration of the second signaling.

11. The method according to claim 10, wherein the access information further comprises at least one of:
an indication of a cell allowed to be accessed;
an indication of a cell prohibited to be accessed;
a reference signal configuration of a second-type cell;
a synchronization signal block configuration of a second-type cell;
an access measurement threshold;
a downlink carrier location of a second-type cell; or
configuration information of system information of a second-type cell.

12. The method according to claim 1, wherein determining the target cell to be accessed, comprises:
determining the target cell according to access information.

13. The method according to claim 12, wherein determining the target cell according to the access information, comprises:
determining candidate cells that satisfy a preset condition according to measurement results of respective cells and access measurement thresholds of the respective cells in the access information; and
determining the target cell from the candidate cells.

14. The method according to claim 13, wherein the preset condition comprises at least one of:
a measurement result of the candidate cell being greater than an access measurement threshold of the candidate cell;
in a case where the candidate cell is a second-type cell, the measurement result of the candidate cell being greater than a measurement result of an associated first-type cell;
in a case where the candidate cell is a second-type cell, a difference between the measurement result of the candidate cell and the measurement result of the associated first-type cell being greater than a first threshold; or
in a case where the candidate cell is a second-type cell, the measurement result of the candidate cell being greater than a second threshold, the measurement result of the associated first-type cell being greater than a third threshold, and the second threshold being greater than or equal to the third threshold.

15. The method according to claim 14, wherein an access measurement threshold of the first-type cell is different from an access measurement threshold of the second-type cell.

16. The method according to claim 13, wherein determining the target cell from the candidate cells, comprises:
determining the target cell from the candidate cells according to a third signaling that is received; and/or
determining the target cell from the candidate cells according to at least one of a terminal identifier, a cell identifier, a physical cell identifier, a terminal type, a service type, a number of access resources of a cell, or an access parameter.

17. The method according to claim 16, wherein the third signaling comprises at least one of: an identifier of the target cell, a physical cell identifier of the target cell, an identifier list of the target cell, a physical cell identifier list of the target cell, or an indication for indicating whether to access a cell.

18. The method according to claim 16, wherein the third signaling is indicated via at least one of an SSB, an MIB, DCI, a PDSCH, a PEI, an LP-WUS signaling, or an SIB signaling.

19. The method according to claim 1, wherein determining the target cell to be accessed, comprises:
determining candidate cells according to a fourth signaling that is received; and
determining the target cell to be accessed from the candidate cells.

20. The method according to claim 19, wherein the fourth signaling comprises at least one of: an identifier of the candidate cell, a physical cell identifier of the candidate cell, an identifier list of the candidate cell, a physical cell identifier list of the candidate cell, or an indication for indicating whether to access a cell.

21. The method according to claim 19, further comprising:
receiving the fourth signaling on a first-type cell or a second-type cell associated with the first-type cell.

22. The method according to claim 19, wherein the fourth signaling is indicated via at least one of an SSB, an MIB, DCI, a PDSCH, a PEI, an LP-WUS signaling, or an SIB signaling.

23. The method according to claim 19, wherein determining the target cell to be accessed from the candidate cells, comprises:
determining the target cell from the candidate cells according to access information; and/or
determining the target cell from the candidate cells according to at least one of a terminal identifier, a cell identifier, a physical cell identifier, a terminal type, a service type, a number of access resources of a cell, or an access parameter.

24. The method according to claim 1, wherein determining the target cell to be accessed, comprises:
determining candidate cells according to at least one of a terminal identifier, a cell identifier, a physical cell identifier, a terminal type, a service type, a number of access resources of a cell, or an access parameter; and
determining the target cell to be accessed from the candidate cells.

25. The method according to claim 24, wherein determining the target cell to be accessed from the candidate cells, comprises:
determining the target cell from the candidate cells according to access information; and/or
determining the target cell from the candidate cells according to a fifth signaling that is received.

26. The method according to claim 25, wherein the fifth signaling comprises at least one of: an identifier of the target cell, a physical cell identifier of the target cell, or an indication for indicating whether to access a cell.

27. The method according to claim 25, wherein the fifth signaling is indicated via at least one of an SSB, an MIB, DCI, a PDSCH, a PEI, an LP-WUS signaling, or an SIB signaling.

28. The method according to claim 2, wherein the first-type cell is a cell that sends a system information block type 1 (SIB1), and the second-type cell is a cell that does not send SIB1.

29. A cell access method, applied to a second node, **characterized in that** the method comprises:
sending access information to a first node on a first-type cell; wherein the access information comprises configuration information of an access resource of a second-type cell associated with the first-type cell, and the second-type cell associated with the first-type cell comprises a target cell.

30. The method according to claim 29, wherein the access information further comprises at least one of:
configuration information of an access resource of the first-type cell;
an indication of the second-type cell associated with the first-type cell;
an indication of a cell allowed to be accessed;
an indication of a cell rejected to be accessed; or
an access parameter.

31. The method according to claim 29, further comprising:
sending access information to the first node on the first-type cell, wherein the access information comprises configuration information of system information of the second-type cell associated with the first-type cell, and the second-type cell comprises the target cell; and
sending system information of the target cell to the first node on the target cell, wherein the system information of the target cell comprises configuration information of an access resource of the target cell.

32. The method according to claim 31, wherein the access information further comprises at least one of:
a reference signal configuration of the second-type cell;
a synchronization signal block configuration of the second-type cell;
a downlink carrier location of the second-type cell;
a downlink frequency point of the second-type cell;
a frequency point and/or a carrier location of an uplink wake-up signal of the second-type cell; wherein
an access parameter.

33. The method according to claim 30 or 31, wherein the access parameter comprises at least one of: an access weight, an access priority, an access selection manner, a terminal identifier, or a terminal group identifier.

34. The method according to claim 29, further comprising:
receiving a first signaling sent from the first node on the target cell or on a first-type cell associated with the target cell; wherein the first signaling is used to request configuration information of an access resource of the target cell; and
in response to the first signaling, sending a second signaling to the first node; wherein the second signaling comprises the configuration information of the access resource of the target cell.

35. The method according to claim 34, wherein the first signaling is an uplink wake-up signaling.

36. The method according to claim 34, further comprising:
sending access information to the first node; wherein the access information comprises: a transmission resource configuration of the first signaling and/or a transmission resource configuration of the second signaling.

37. The method according to claim 36, wherein the access information further comprises at least one of:
an indication of a cell allowed to be accessed;
an indication of a cell prohibited to be accessed;
a reference signal configuration of the second-type cell;
a synchronization signal block configuration of the second-type cell;
an access measurement threshold;
a downlink carrier location of the second-type cell; or
the configuration information of the system information of the second-type cell.

38. A communication apparatus, **characterized by** comprising: a memory and a processor; wherein the memory is coupled with the processor; the memory is configured to store instructions executable by the processor; and the processor, upon executing the instructions, performs the method according to any one of claims 1 to 37.

39. A computer readable storage medium, wherein the computer readable storage medium has stored computer instructions thereon, and the computer instructions, upon being executed on an electronic device, enable the electronic device to perform the method according to any one of claims 1 to 37.
